(19) Europäisches Patentamt
European Patent Office
Office européen des brevets

(11) Publication number: **0 093 792**
**B1**

(12) **EUROPEAN PATENT SPECIFICATION**

(45) Date of publication of patent specification: **10.09.86**

(51) Int. Cl.$^4$: **A 01 N 41/10** // C07C147/08

(21) Application number: **82104151.4**

(22) Date of filing: **12.05.82**

(54) **Method for controlling algae.**

(43) Date of publication of application:
**16.11.83 Bulletin 83/46**

(45) Publication of the grant of the patent:
**10.09.86 Bulletin 86/37**

(84) Designated Contracting States:
**BE DE FR GB NL**

(56) References cited:
**FR-A-2 296 623**
**US-A-3 159 532**

(73) Proprietor: **STAUFFER CHEMICAL COMPANY**
**Westport Connecticut 06880 (US)**

(72) Inventor: **Liu, Sophia Y.**
**264 Segovia Place**
**Fremont, California 94538 (US)**

(74) Representative: **Jaeger, Klaus, Dr. et al**
**JAEGER & PARTNER Patentanwälte Bergstrasse 48 1/2**
**D-8035 München-Gauting (DE)**

**EP 0 093 792 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method of controlling or inhibiting the growth of algae by the use of the compound 3-(4-tolylsulfonyl)acrylonitrile, which has the formula

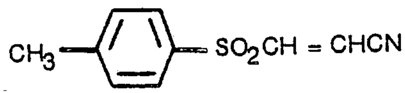

used in an algicidally effective amount in an aqueous environment, and also to compositions for control or inhibition of the growth of algae containing an algicidally effective amount of this compound.

From the patent US—A—3 159 532 a method of inhibiting the growth of bacteria and fungi is known comprising applying to bacteria and fungi certain arylsulfonyl alkenenitrile compounds including 3-(4-tolylsulfonyl)acrylonitrile. This compound can be prepared by reaction of 4-toluenethiol with 2,3-dichloropropionitrile, followed by oxidation with hydrogen peroxide and dehydrochlorination with triethylamine. This compound shows activity as a soil fungicide.

According to the document FR—A—2 296 623 3 - alkylsulfonyl - 2 - halogeno - acrylonitrile compounds and 3-arylsulfonyl-2-halogeno-acrylonitrile compounds show algicidal, fungicidal and bactericidal activity.

Algicidal evaluation of this compound was performed using the following procedure.

This test procedure utilizes the uptake by algae of radioactively labeled carbon dioxide ($^{14}CO_2$) generated from labeled sodium bicarbonate and an acid to simulate short term photosynthesis, and the ability of toxicants to inhibit this process. The inhibition of carbon dioxide uptake by toxic materials is a relevant parameter indicating algicidal acitivity, as algae utilize $CO_2$ as their primary carbon source during normal photosynthetic metabolism.

A stock solution of the compound to be tested was prepared by dissolving the compound in water or water containing a small amount (4% by volume or less) of a solvent for the test compound, to produce a solution containing 1600 µg/ml. of the test compound. This stock solution was then diluted with water to produce test solutions of the compound containing form 800 µg/ml., downwards.

Into a Microtiter there was put 50 µl of a suspension of the test algae, 25 µl of radioactive $^{14}$carbon labeled sodium bicarbonate solution in sterile $10^{-2}$ molar dipotassium acid phosphate and 25 µl of the solution of the toxicant in an amount so as to give the desired compound concentration in a total volume of 100 µl including the toxicant, algae suspension and sodium bicarbonate solution.

The Microtiter plates were then covered with transparent tape to eliminate loss of sample volume through evaporation. Carbon dioxide uptake was allowed to proceed for four hours at ambient temperature under continuous illumination from cool white fluorescent lamps. At the end of this time, the tape was removed, the samples stirred and 50 µl removed from each by pipet. The removed material was vacuum filtered through a millipore filter, and the filters were washed with distilled water and air dried for 10—15 minutes. The filters were then placed into 10 ml. of a liquid scintillation fluid in a scintillation vial. The sample vials were then counted in a liquid scintillation counter which had settings optimized for $^{14}C$ counting. The appropriate background counts were deducted from the experimental values.,

Duplicate negative controls were run in which the toxicant was replaced by 25 µl of sterile distilled water. Positive controls were also incorporated into the test using cupric sulfate pentahydrate.

The duplicate four hour controls for each species of algae were averaged. Each algicide concentration result was then determined and converted to a percent reduction of the carbon doxide uptake using the negative controls as 100%. The concentration of the test compound which gave a 50% reduction of $CO_2$ uptake is called the $I_{50}$ value for that compound. Test componds are considered effective against algae if the $I_{50}$ value is less than or equal to 100 µg/ml.

Four species of algae were utilized in this test: *Chlorella pyenoidosa, Scenedesmus obliquus, Anacystis nidulans,* and *Anabaena flos-aquae*. The latter two are blue-green algae.

In this test the compound has an $I_{50}$ as follows:
*Chlorella pyrenoidosa* — 5;
*Scenedesmus obliquus* — 1.5;
*Anacystis nidulans* and *Anabaena flos-aquae* — less than 1.

For use in controlling or inhibiting the growth of algae, the active compound, per se or in a formulation with inert carriers or diluents and optionally surfactants, is introduced into an aqueous environment in whch algae are present, or may occur. The manner in which the aqueous environment is treated will vary with the specific problems encountered. The compound may be utilized for instance, in ponds, lakes and other areas in which water, particularly industrial process water or effluents, is stored. Water flowing sites such as drainage ditches may be similarly treated. The compound may be utilized for the control of the growth of algae in industrial cooling towers and other water recirculating systems.

When so used, the compound is added to the aqueous environment in an algicidally effective amount, which usually ranges from about 0.1 to about 50 ppm, preferably from about 0.1 to about 10 ppm.

Examples of algicidal formulations in which the active compound may be employed are dispersable or soluble powders or solids, or emulsifiable concentrates. Suitable carriers or diluents for use in preparation of such formulations include solvents, such as aromatic hydrocarbons j(optionally chlorinated) for instance, xylene, benzene and

chlorobenzenes, paraffins such as petroleum fractions, alcohols, for instance methanol or ethanol, and amines such as ethanolamine or dimethylformamide; finely divided solid carriers, for instance, natural and synthetic meals or powders including kaolin, alumina, chalk, talc, or highly dispersed silicates, emulsifiers and surfactants including nonionic and anionic emulsifiers such as polyoxyethylene fatty acid esters, polyoxyethylene fatty alcohol esters, alkyl or aryl sulfonates, or magnesium stearate or sodium oleate; and dispersing agents such as lignin, methyl cellulose, or sulfite waste liquors. Solid pellets or large tablets containing the active compound may be manufactured by mixing a dispersible or solid powder formulation of said compound with a binder.

Emulsions employing the algicidal compound disclosed herein may be prepared by dissolving the active compound in a water-immiscible solvent such as aromatic hydrocarbons and petroleum fractions, in association with a surfactant such as mentioned above, to obtain an emulsifiable concentrate which is then poured into water, preferably with vigorous agitation. Emulsions may also be prepared by dissolving the active compound in a water-miscible solvent such as Carbitol® (diethylene glycol monoethyl ether) or an analog of Carbitol, acetone, a lower alkanol or Cellosolve® (thylene glycol monoethyl ether), to obtain a concentrate which can then be added to water containing a surfactant such as mentioned above, preferably with vigorous agitation.

In addition to the active compound, algicidal formulations according to this invention may also contain other active ingredients suitable for control of algae.

## Claims

1. A method for controlling or inhibiting the growth of algae comprising applying to the algae or a locus where control is desired by introducing into an aqueous environment an algicidally effective amount of the compound 3-(4-tolylsulfonyl)-acrylonitrile.

2. A method of claim 1, characterized in that applying the active compound by introducing same into an aqueous environment is carried out in the presence of a surfactant.

3. An algicidal composition comprising

(a) an algicidally effective amount of the compound 3-(4-tolylsulfonyl)acrylonitrile;

(b) an algicidally suitable inert diluent or carrier; and

(c) a surfactant.

4. A solid algicidal composition having the form of pellets or large tablets and comprising

(a) an algicidally effective amount of the compound 3-(4-tolylsulfonyl)acrylonitrile;

(b) an algicidally suitable inert diluent or carrier; and

(c) optionally a surfactant.

## Patentansprüche

1. Verfahren zur Kontrolle oder Inhibierung von Algenwachstum, wobei der Stoff 3-(4-Tolylsulfonyl)acrylnitril in algizidwirksamer Menge in eine wässrige Umgebung eingeführt wird und an Algen oder dort, wo Kontrolle erwünscht ist, zur Anwendung kommt.

2. Verfahren nach Anspruch 1 dadurch gekennzeichnet, daß die Anwendung des Wirkstoffes durch dessen Einführung in eine wässrige Umgebung in Gegenwart eines oberflächenaktiven Stoffes durchgeführt wird.

3. Algizides Gemisch von

(a) 3-(4-Tolylsulfonyl)acrylnitril in algizidwirksamer Menge,

(b) einem mit Algizden kompatiblen inerten Verdünner oder Träger, und

(c) einem oberflächenaktiven Stoff.

4. Festes algizides Gemisch in Pelletform oder in Gestalt großer Tabletten von

(a) 3-(4-Tolylsulfonyl)acrynitril in algizidwirksamer Menge,

(b) einem mit Algiziden kompatiblen inerten Verdünner oder Träger, und

(c) gegebenenfalls einem oberflächenaktiven Stoff.

## Revendications

1. Un procédé pour le contrôle ou l'inhibition de la croissance des algues, consistant à appliquer aux algues ou en un lieu où le contrôle est souhaité par introduction en milieu aqueux d'une quantité efficace du point de vue algicide d'un composé consistant en le 3-(4-tolylsulfonyl)-acrylonitrile.

2. Un procédé selon la revendication 1, caractérisé en ce que l'application du composé actif par introduction en milieu aqueux est effectuée en présence d'un agent tensio-actif.

3. Une composition algicide comprenant:

(a) une quantité efficace du point de vue algicide du composé consistant en 3-(4-tolylsulfonyl)-acrylonitrile;

(b) un support ou diluant inerte compatible avec un algicide; et

(c) un agent tensio-actif.

4. Une composition algicide solide se présentant sous forme de pellets ou de comprimés et comprenant:

(a) une quantité efficace du point du vue algicide du composé consistant en 3-(4-tolylsulfonyl)-acrylonitrile;

(b) un support ou diluant inerte compatible avec un algicide; et

(c) éventuellement, un agent tensio-actif.